# EUROPEAN PATENT APPLICATION

(11) **EP 4 512 858 A1**
(43) Date of publication of application: **26.02.2025**
(21) Application number: 23791954.3
(22) Date of filing: 21.04.2023
(51) Int. Cl.: C08L 23/26, B32B 27/32, C08L 23/08

(54) **RESIN COMPOSITION AND MULTILAYER LAMINATED FILM**

(30) Priority: 22.04.2022 JP 2022071042
(71) Applicant: Mitsui Chemicals, Inc., Tokyo 104-0028 (JP)
(72) Inventor: HAYAKAWA, Akio, Ichihara-shi, Chiba 299-0108 (JP)
(74) Representative: Hoffmann Eitle
(86) International application number: PCT/JP2023/015919
(87) International publication number: WO 2023/204306

(57) **Abstract**

The present invention provides a resin composition capable of adhering a plurality of resin layers composed of different resins together more firmly than a conventional resin composition, or a multilayer laminated film in which resin layers composed of different resins are adhered together more firmly than before.

A resin composition characterized in that it includes [I] a modified ethylene-α-olefin copolymer [A] obtained by modifying a copolymer of ethylene and an α-olefin having 3 to 20 carbon atoms with an unsaturated carboxylic acid or a derivative thereof, the modified ethylene-α-olefin copolymer [A] satisfying the following (i) and (ii): (i) a density in a range of 0.860 g/cm³ or more and less than 0.900 g/cm³; and (ii) an amount grafted of 0.01 to 5% by mass; [II] an unmodified ethylene-α-olefin copolymer resin [B] having a melting point of 121°C or less, and [III] an unmodified ethylene-α-olefin copolymer elastomer [C], in which a melt flow rate (ASTM D 1238, 190°C, 2.16 kg load) is in a range of 0.1 to 50 g/10 minutes, and the amount of the unsaturated carboxylic acid or a derivative thereof grafted is in a range of 0.01 to 1.0% by mass relative to 100% by mass of the total resin composition.

## Description

### Technical Field

The present invention relates to a resin composition and a multilayer laminated film.

### Background Art

Laminated films conventionally used for packaging materials are produced by stacking an outer layer composed of a resin excellent in mechanical properties such as a tensile strength, an intermediate layer composed of a resin such as a polyamide resin or an ethylene-vinyl alcohol copolymer, which are excellent in barrier properties, and an inner layer composed of a resin excellent in heat sealability via a resin composition with its adhesiveness.

Resins used for the inner layer such as a low density polyethylene have been widely used. Resins used for the outer layer such as a polyethylene terephthalate and a polypropylene have been widely used. That is, a plurality of combinations of outer layer, inner layer, and intermediate layer has allowed superior functions and physical properties to be imparted to laminated films in addition to packaging materials.

On the other hand, there has been a demand for packaging materials to reduce load on the environment, and specifically the packaging materials have been increasingly required to further facilitate recycling. However, laminated films conventionally used for packaging materials are produced in combinations of a wide variety of resins in order to provide superior functions and physical properties, making it difficult to be recycled.

Therefore, laminated films produced by using fewer types of resins, have been increasingly demanded. As for such a laminated film, a stretched polyolefin film has attracted attention, and representative examples thereof include a stretched polyethylene film.

The stretched polyethylene film is excellent in mechanical properties such as a tensile strength compared to an unstretched polyethylene film, and therefore various studies have been made to use the stretched polyethylene film in laminated films for packaging materials that do not contain, for example, a polyethylene terephthalate and polypropylene. Along with such studies, various studies have also been made on resin compositions for adhering a polyethylene and a barrier resin in a multilayer stretched polyethylene film including polyethylenes as an outer layer and inner layer and a barrier resin as an intermediate layer.

For example, Patent Literature 1 discloses that using an adhesive polyethylene composition composed of a predetermined modified ethylene-α-olefin copolymer, a predetermined unmodified ethylene-α-olefin copolymer resin, a predetermined unmodified ethylene-α-olefin copolymer elastomer, and an adhesiveness-imparting agent, having predetermined physical properties, a laminated film including a stretched polyethylene film is obtained.

### Citation List

### Patent Literature

[Patent Literature 1] JPH9-249779A

### Summary of Invention

### Technical Problem

However, in recent years, laminated films for packaging materials have been required to enhance their functions and physical properties while maintaining facilitation of recycling, and resin compositions having their adhesiveness have also been required, for example, to be able to adhere resins forming each layer of a multilayer laminated film to each other more firmly. With an increase in such a demand, the adhesive polyethylene composition described in Patent Literature 1 has had room for improvement on its adhesive strength.

The present invention provides a resin composition capable of adhering a plurality of resin layers composed of different resins together more firmly than conventional resin compositions. Moreover, the present invention provides a multilayer laminated film in which resin layers composed of different resins are adhered together more firmly than before.

### Solution to Problem

The present inventors have found as a result of investigations conducted under these circumstances that according to a resin composition including a specific modified ethylene-α-olefin copolymer, a specific unmodified ethylene-α-olefin copolymer resin [B], a specific unmodified ethylene-α-olefin copolymer elastomer [C], and a multilayer laminated film including a layer composed of the resin composition and having a specific layer configuration, the aforementioned problems can be solved, and have thus completed the present invention.

Accordingly, the present invention relates to the following [1] to [13].
[1] A resin composition comprising:
   [I] a modified ethylene-α-olefin copolymer [A] obtained by modifying a copolymer of ethylene and an α-olefin having 3 to 20 carbon atoms with an unsaturated carboxylic acid or a derivative thereof, the modified ethylene-α-olefin copolymer [A] satisfying the following (i) and (ii):
      (i) a density in a range of 0.860 g/cm³ or more and less than 0.900 g/cm³; and
      (ii) an amount grafted of 0.01 to 5% by mass;
   [II] an unmodified ethylene-α-olefin copolymer resin [B] having a melting point of 121°C or less; and
   [III] an unmodified ethylene-α-olefin copolymer elastomer [C],
      wherein a melt flow rate (ASTM D 1238, 190°C, 2.16 kg load) is in a range of 0.1 to 50 g/10 minutes, and
      the amount of the unsaturated carboxylic acid or a derivative thereof grafted is in a range of 0.01 to 1.0% by mass relative to 100% by mass of the total resin composition.
[2] The resin composition according to [1], wherein the unmodified ethylene-α-olefin copolymer resin [B] has a density of 0.900 g/cm³ or more, and
   the unmodified ethylene-α-olefin copolymer elastomer [C] has a density of less than 0.900 g/cm³.
[3] The resin composition according to [1] or [2], wherein the resin composition has a melting point of 119°C or less.
[4] The resin composition according to any one of [1] to [3], wherein the unmodified ethylene-α-olefin copolymer resin [B] has a density of less than 0.930 g/cm ³.
[5] The resin composition according to any one of [1] to [4], wherein the unmodified ethylene-α-olefin copolymer resin [B] has a density of 0.915 g/cm³ or less.
[6] The resin composition according to any one of [1] to [4], wherein the resin composition has a density of 0.875 to 0.920 g/cm³.
[7] A multilayer laminated film which is a laminate of three or more layers in which a polyolefin layer [I],
   an adhesive layer [II] composed of the resin composition according to any one of [1] to [6], and
   a polyamide resin layer [III], an ethylene-vinyl alcohol copolymer layer [IV] or a mixed layer [V] of a polyamide resin and an ethylene-vinyl alcohol copolymer are stacked in this order.
[8] The multilayer laminated film according to [7], wherein the polyolefin is a polyethylene or a polypropylene.
[9] The multilayer laminated film according to [7], wherein the multilayer laminated film is stretched in at least one axis direction.
[10] The multilayer laminated film according to [9], wherein the multilayer laminated film is stretched in at least one axis direction at a stretching ratio of 1.5 to 10 times.
[11] The multilayer laminated film according to [7], wherein the multilayer laminated film is biaxially stretched.
[12] The multilayer laminated film according to [11], wherein the multilayer laminated film is biaxially stretched in each axial direction at a stretching ratio of 1.5 to 10 times.
[13] The multilayer laminated film according to [7], wherein the total thickness of the adhesive layer [II], and
   the polyamide resin layer [III], the ethylene-vinyl alcohol copolymer layer [IV] or the mixed layer [V] of a polyamide resin and the ethylene-vinyl alcohol copolymer is 12% or less of the total thickness of the laminate.

### Advantageous Effect of Invention

According to the present invention, a resin composition capable of adhering a plurality of resin layers composed of different resins together more firmly than conventional resin compositions, can be provided. Moreover, the present invention can provide a multilayer laminated film in which resin layers composed of different resins are adhered together more firmly than before.

### Description of Embodiments

In the present invention, descriptions of "XX or more and YY or less" and "XX to YY" representing numerical ranges each refer to a numerical range including a lower limit value and a upper limit value, which are endpoints, unless otherwise specified.

Moreover, when numerical ranges are described stepwise, the upper limit and lower limit of each numerical range can be arbitrarily combined.

Hereinafter, the resin composition according to the present invention and a multilayer laminated film obtained using the composition will be specifically described.

### <Modified ethylene-α-olefin copolymer [A]>

The modified ethylene-α-olefin copolymer [A] used in the present invention is obtained by modifying, specifically graft-modifying a copolymer [A'] of ethylene and an α-olefin having 3 to 20 carbon atoms with an unsaturated carboxylic acid or a derivative thereof.

### (Unmodified ethylene-α-olefin copolymer [A'])

A copolymer [A'] of ethylene and an α-olefin having 3 to 20 carbon atoms (hereinafter also referred to as an unmodified ethylene-α-olefin copolymer [A']), which is an unmodified polymer, is a copolymer obtained by copolymerizing monomers including ethylene and an α-olefin having 3 to 20 carbon atoms.

Examples of the α-olefins having 3 to 20 carbon atoms include propylene, 1-butene, 1-pentene, 1-hexene, 4-methyl-1-pentene, 1-octene, and 1-decene. Among these, an α-olefin having 3 to 10 carbon atoms is preferred, and propylene, 1-butene, 1-hexene, 4-methyl-1-pentene, and 1-octene are more preferred. These α-olefins can be used singly or in combination of two or more thereof.

The density of the unmodified ethylene-α-olefin copolymer [A'] is usually 0.860 to 0.930 g/cm³, preferably 0.860 to 0.900 g/cm³, more preferably 0.860 to 0.895 g/cm³, and particularly preferably in the range of 0.860 to 0.890 g/cm³.

The ethylene-α-olefin copolymer [A'] used in the present invention may include a constituent unit derived from other monomer in addition to the constituent units derived from ethylene and the α-olefin, within a range that does not impair the characteristics.

Examples of the constituent units derived from such other monomers include constituent units derived from linear non-conjugated dienes such as 1,4-hexadiene, 1,6-octadiene, 2-methyl-1,5-hexadiene, 6-methyl-1,5-heptadiene, and 7-methyl-1,6-octadiene; constituent units derived from cyclic non-conjugated dienes such as cyclohexadiene, dicyclopentadiene, methyltetrahydroindene, 5-vinyl norbornene, 5-ethylidene-2-norbornene, 5-methylene-2-norbornene, 5-isopropylidene-2-norbornene, and 6-chloromethyl-5-isopropenyl-2-norbornene; constituent units derived from diene compounds such as 2,3-diisopropylidene-5-norbornene, 2-ethylidene-3-isopropylidene-5-norbornene, and 2-propenyl-2,2-norbornadiene. These other monomers can be used singly or in combination of two or more thereof.

The content of constituent unit derived from the other monomer described above is usually 10 mol% or less and preferably 0 to 5 mol%.

A method for producing the ethylene-α-olefin copolymer [A'] is not particularly limited, and for example, it can be produced by a conventionally known method using a catalyst such as a Ti-based catalyst, a vanadium (V)-based catalyst, or a Zr-based catalyst.

The density of the modified ethylene-α-olefin copolymer [A] used in the present invention is in a range of 0.860 g/cm³ or more and 0.930 g/cm³ or less, preferably 0.860 g/cm³ or more and 0.900 g/cm³ or less, more preferably 0.860 g/cm³ or more and less than 0.900 g/cm³, further preferably 0.860 g/cm³ or more and 0.895 g/cm³ or less, and particularly preferably in the range of 0.860 g/cm³ or more and 0.890 g/cm³ or less. Use of the modified ethylene-α-olefin copolymer [A] in such a range allows a resin composition with an improved adhesive strength to be obtained.

The melt flow rate (MFR; ASTM D 1238, 190°C, 2.16 kg load) of the modified ethylene-α-olefin copolymer [A] is preferably 0.5 to 10 g/10 minutes and more preferably 1 to 5 g /10 minutes.

The amount of the unsaturated carboxylic acid or a derivative thereof grafted in the modified ethylene-α-olefin copolymer [A] is in a range of 0.01 to 5% by mass, preferably in the range of 0.1 to 3% by mass, and more preferably in the range of 0.3 to 1% by mass, relative to 100% by mass of the modified ethylene-α-olefin copolymer [A]. Use of the modified ethylene-α-olefin copolymer [A] in such a range allows a resin composition with an improved adhesive strength to be obtained.

Examples of the unsaturated carboxylic acid grafted to the unmodified ethylene-α-olefin copolymer [A'] include acrylic acid, methacrylic acid, maleic acid, fumaric acid, and itaconic acid. Examples of the derivatives of unsaturated carboxylic acids include an unsaturated carboxylic anhydride, an unsaturated carboxylic acid ester, an unsaturated carboxylic amide, an unsaturated carboxylic imide, and an unsaturated carboxylic acid metal salt. Specific examples of the derivatives of unsaturated carboxylic acid include maleic anhydride, himic anhydride TD (endic acid anhydride), itaconic anhydride, citraconic anhydride; methyl acrylate, methyl methacrylate, ethyl acrylate, ethyl methacrylate, glycidyl acrylate, maleic acid monomethyl ester, maleic acid diethyl ester, fumaric acid monomethyl ester, fumaric acid dimethyl ester, itaconic acid monomethyl ester, itaconic acid diethyl ester; acrylamide, methacrylamide, maleic acid monoamide, maleic acid diamide, maleic acid-N-monoethylamide, maleic acid-N,N-diethylamide, maleic acid-N-monobutyramide, maleic acid-N,N-dibutylamide, fumaric acid monoamide, fumaric acid diamide, fumaric acid-N-monobutylamide, fumaric acid-N,N-dibutylamide; maleimide, N-butylmaleimide, N-phenylmaleimide; sodium acrylate, sodium methacrylate, potassium acrylate, and potassium methacrylate. Among these unsaturated carboxylic acids or derivatives thereof, maleic anhydride and himic anhydride TD are preferred, and maleic anhydride is more preferred.

A method for producing the modified ethylene-α-olefin copolymer [A] using, as raw materials, for examples, the above unsaturated carboxylic acids or derivatives thereof (grafted monomers) and unmodified ethylene-α-olefin copolymers [A'], is not particularly limited.

As the method for producing the modified ethylene-α-olefin copolymer [A], there are a extrusion modification method in which an unmodified ethylene-α-olefin copolymer [A'] is melted in an extruder and to the melt is added a grafted monomer to undergo graft modification (graft copolymerization), and a solution modification method in which an unmodified ethylene-α-olefin copolymer [A'] is dissolved in a solvent and to the resulting solution is added a grafted monomer to undergo graft modification. Among these, the extrusion modification method is preferred.

In any production method, in order to efficiently subject the grafted monomer to graft copolymerization, it is preferably reacted in the presence of a radical initiator. The radical initiator is not particularly limited as long as graft modification can be made with an unsaturated carboxylic acid or a derivative thereof as a grafted monomer, and examples thereof include an organic peroxide, an organic perester, and an azo compound. Examples of the radical initiators include organic peroxides such as benzoyl peroxide, dichlorobenzoyl peroxide, dicumyl peroxide, di-tert-butyl peroxide, 2,5-dimethyl-2,5-di(peroxybenzoate) hexyne-3,1,4-bis(tert-butylperoxyisopropyl) benzene and lauroyl peroxide; organic peresters such as tert-butyl peracetate, 2,5-dimethyl-2,5-di(tert-butylperoxy)hexyne-3, 2,5-dimethyl-2, 5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl pivalate, and tert-butyl perdiethyl acetate; and azo compounds such as azoisobutyronitrile and dimethylazoisobutyrate. Among these, the organic peroxides and organic peresters are preferred, and dialkyl peroxides such as dicumyl peroxide, di-tert-butyl peroxide, 2,5-dimethyl-2,5-di(peroxybenzoate)hexyne-3,2,5-dimethyl-2,5-di(tert-butylperoxy)hexane, and 1,4-bis(tert-butylperoxyisopropyl)benzene are more preferred.

The radical initiator is usually used in a proportion of 0.001 to 1 part by mass relative to 100 parts by mass of an unmodified ethylene-α-olefin copolymer [A']. Upon the graft modification described above, other monomer such as styrene may be co-present as a grafted monomer.

### <Unmodified ethylene-α-olefin copolymer resin [B]>

The unmodified ethylene-α-olefin copolymer resin [B] used in the present invention is a copolymer resin obtained by copolymerizing monomers including ethylene and an α-olefin having 3 to 20 carbon atoms.

The content of constituent unit derived from ethylene (ethylene content) in the unmodified ethylene-α-olefin copolymer resin [B] is 70 mol% or more and preferably 75 to 99 mol%.

Examples of the α-olefins include propylene, 1-butene, 1-pentene, 1-hexene, 4-methyl-1-pentene, 1-octene, and 1-decene. Among these, propylene, 1-butene, 1-hexene, 4-methyl-1-pentene, and 1-octene are preferred. These α-olefins can be used singly or in combination of two or more thereof.

The melting point of the unmodified ethylene-α-olefin copolymer resin [B] is 121°C or less, preferably 120°C or less, and more preferably 119°C or less. A lower limit of the melting point is not particularly limited, but can be, for example, 80°C or more.

For example, when a layer made of the resin composition of the present invention is stretched, the copolymer [B] having a melting point of 121°C or less, allows the copolymer resin [B] to be more likely to melt, leading to a small stress remaining at an interface between the layer made from the resin composition and an adherend, as a result of which resistance to peeling is increased, thereby enabling adhering the layer made of the resin composition and the adherend more firmly. Incidentally, the above melting point is the temperature at the peak position detected on the highest temperature side of an endothermic curve, measured by a differential scanning calorimeter (DSC).

The density of the unmodified ethylene-α-olefin copolymer resin [B] is preferably less than 0.930 g/cm³ and preferably 0.915 g/cm³ or less. The lower limit of the density is not particularly limited, but may be, for example, 0.900 g/cm³ or more.

When the density of the copolymer resin [B] is less than 0.930 g/cm³, for example, a multilayer laminated film including a layer obtained from the resin composition of the present invention becomes flexible. Therefore, a stress generated when a layer obtained from the resin composition of the present invention included in the multilayer laminated film peels off from other layer, comes to be distributed, making it possible for the layer obtained from the resin composition of the present invention in the multilayer laminated film and other layer (for example, an intermediate layer with excellent barrier properties) to be adhered more firmly.

The melt flow rate (MFR; ASTM D 1238, 190°C, 2.16 kg load) of the unmodified ethylene-α-olefin copolymer resin [B] is preferably 0.5 to 10 g/10 minutes and more preferably 1 to 5g/10 minutes.

The unmodified ethylene-α-olefin copolymer resin [B] can be produced by a conventionally known method using a catalyst such as a titanium (Ti)-based catalyst or a zirconium (Zr)-based catalyst.

### <Unmodified ethylene-α-olefin copolymer elastomer [C]>

The unmodified ethylene-α-olefin copolymer elastomer [C] used in the present invention is a copolymer of ethylene and an α-olefin having 3 to 20 carbon atoms, and its density is usually less than 0.900 g/cm³, preferably 0.860 or more and less than 0.900 g/cm³, more preferably 0.860 to 0.895 g/cm³, and particularly preferably in the range of 0.860 to 0.890 g/cm³.

The melt flow rate (MFR; ASTM D 1238, 190°C, 2.16 kg load) of the unmodified ethylene-α-olefin copolymer elastomer [C] is preferably 1 to 12 g/10 minutes and more preferably 2 to 6g/10 minutes.

Specific examples and preferred examples of the α-olefins having 3 to 20 carbon atoms are the same as those for the unmodified ethylene-α-olefin copolymer [A'].

The ethylene-α-olefin copolymer elastomer [C] used in the present invention has a constituent unit derived from other monomer in addition to the constituent units derived from ethylene and the α-olefin within a range that does not impair the characteristics. Specific examples of other monomers and a preferred range of the content of constituent unit derived from other monomer are the same as in the case of the unmodified ethylene-α-olefin copolymer [A'].

A method for producing the ethylene-α-olefin copolymer elastomer [C] is not particularly limited, and for example, it can be produced by conventionally known methods using a catalyst such as a Ti-based catalyst, a vanadium (V)-based catalyst, or a Zr-based catalyst.

### <Resin composition>

The melt flow rate (ASTM D 1238, 190°C, 2.16 kg load) of the resin composition of the present invention is 0.1 to 50 g/10 minutes, preferably 0.2 to 10 g/10 minutes, and further preferably in the range of 0.5 to 5 g/10 minutes. Within the above range of the melt flow rate of the resin composition, it is excellent in its processability.

The amount of the unsaturated carboxylic acid or a derivative thereof grafted is in a range of 0.01 to 1.0% by mass and preferably 0.1 to 0.8% by mass, relative to 100% by mass of the total resin composition of the present invention. Within the above range of the amount grafted, a resin composition with improved adhesive strength can be obtained.

The melting point of the resin composition of the present invention is preferably 119°C or less, more preferably 100 to 119°C, and further preferably 100 to 110°C. The resin composition having such a melting point makes it possible to facilitate a plurality of resin layers composed of different resins to be adhered together more firmly than conventional resin compositions.

The density of the resin composition of the present invention is preferably 0.875 to 0.920 g/cm³ and more preferably 0.880 to 0.910 g/cm³. When the density of the resin composition of the present invention is 0.920 g/cm³ or less, for example, a multilayer laminated film including a layer composed of the resin composition of the present invention is likely to be flexible, and a stress generated when a layer composed of the resin composition of the present invention peels off from the multilayer laminated film, tends to be distributed, making it possible for each resin layer constituting the laminated film to be adhered together more firmly.

In the resin composition of the present invention, a mass ratio of the modified ethylene-α-olefin copolymer [A] and the unmodified ethylene-α-olefin copolymer elastomer [C], to the unmodified ethylene-α-olefin copolymer resin [B] ([A] + [C])/[B] is preferably 95/5 to 50/50, more preferably 90/10 to 60/40, further preferably 85/15 to 70/ 30, and particularly preferably 85/15 to 75/25.

In the resin composition of the present invention, a mass ratio of the modified ethylene-α-olefin copolymer [A] to the unmodified ethylene-α-olefin copolymer elastomer [C] ([A]/[C]) is preferably 50/50 to 30/70 and more preferably 40/60 to 25/65.

The resin composition of the present invention may include an additive and a polymer in addition to [A] to [C] as long as the object of the present invention is not impaired. Examples of the additives include a tackifier, a heat stabilizer, a weather stabilizer, an antistatic agent, a nucleating agent, a pigment, a dye, and wax. Examples of the polymer include a polyolefin other than [A] to [C], a polyester resin, and a polyamide resin.

The resin composition of the present invention exhibits high adhesive strength for polyolefins such as a polyethylene and a polypropylene, a polyamide resin, and an ethylene-vinyl alcohol copolymer.

### <Preparation of resin composition>

The resin composition of the present invention can be prepared by mixing each component described above using, for example, a Henschel mixer, a V-blender, a ribbon blender, and a tumbler blender, and then melt-kneading the resulting mixture by, for example, a single-screw extruder, a twinscrew extruder, a kneader or a Banbury mixer. The obtained melt-kneaded product may be further subjected to a granulation step, or the melt-kneaded product may be cooled followed by pulverization of the obtained mass, then to prepare a resin composition in particulate form.

### <Multilayer laminated film>

The multilayer laminated film of the present invention is a laminate of three or more layers in which a polyolefin layer [I] made of a polyolefin,
an adhesive layer [II] composed of the resin composition (made of the resin composition) obtained in the manner as described above, and
a polyamide resin layer [III], an ethylene-vinyl alcohol copolymer layer [IV], or a mixed layer [V] of a polyamide resin and an ethylene-vinyl alcohol copolymer,
are stacked in this order.

Examples of the polyolefins forming the polyolefin layer [I] include homopolymers of α-olefins such as ethylene, propylene, propylene, 1-butene, 1-pentene, 1-hexene, 4-methyl-1-pentene, 1-octene, and 1-decene, or a copolymer copolymerized by using any two or more of these α-olefins as raw materials. Among these, a polyethylene and a polypropylene are preferred, and a polyethylene is more preferred.

The polyethylene may be linear or branched, and is preferably linear. The polyethylene may also be a high-density polyethylene or a low-density polyethylene, but a low-density polyethylene is preferable. That is, the polyethylene is more preferably a linear low density polyethylene.

Herein, the high-density polyethylene refers to a polyethylene having a density of more than 0.940 g/cm³, and the low-density polyethylene refers to a polyethylene having a density of 0.940 g/cm³ or less.

As the polyamide resin forming the polyamide resin layer [III] and the polyamide resin included in the mixed layer [V], for example, nylon 6, nylon 66, nylon 610, nylon 12, nylon 11, MXD nylon, an amorphous nylon, and a terephthalic acid/adipic acid/hexamethylene diamine copolymer, are preferably used.

As an ethylene-vinyl alcohol copolymer forming the ethylene-vinyl alcohol copolymer layer [IV] and an ethylene-vinyl alcohol copolymer included in the mixed layer [V], a copolymer in which the content of constituent unit derived from ethylene (ethylene content) is 20 to 50 mol% is preferably used. Such an ethylene-vinyl alcohol copolymer can be prepared by saponifying a copolymer of ethylene and vinyl acetate.

In the multilayer laminated film of the present invention, from the viewpoint of its excellent film physical properties after recycling, the total thickness of the adhesive layer [II], and the polyamide resin layer [III], the ethylene-vinyl alcohol copolymer layer [IV] or the mixed layer [V] of the polyamide resin and the ethylene-vinyl alcohol copolymer is preferably 12% or less of the total thickness of the laminate and more preferably 10% or less of the total thickness of the laminate.

In the multilayer laminated film of the present invention, the total thickness of the adhesive layer [II], and the polyamide resin layer [III], the ethylene-vinyl alcohol copolymer layer [IV] or the mixed layer [V] of the polyamide resin and the ethylene-vinyl alcohol copolymer, is usually 1% or more of the total thickness of the laminate.

Examples of the layer configurations of the multilayer laminated film of the present invention include the following layer configurations.
(1) Three-layer laminated film of polyolefin layer [I]/adhesive layer [II]/polyamide resin layer [III]
(2) Three-layer laminated film of polyolefin layer [I]/adhesive layer [II]/ethylene-vinyl alcohol copolymer layer [IV]
(3) Three-layer laminated film of polyolefin layer [I]/adhesive layer [II]/mixed layer [V] of polyamide resin and ethylene-vinyl alcohol copolymer
(4) Four-layer laminated film of polyolefin layer [I]/adhesive layer [II]/polyamide resin layer [III]/ethylene-vinyl alcohol copolymer layer [IV]
(5) Four-layer laminated film of polyolefin layer [I]/adhesive layer [II]/ethylene-vinyl alcohol copolymer layer [IV]/polyamide resin layer [III]
(6) Four-layer laminated film of polyolefin layer [I]/adhesive layer [II]/mixed layer of polyamide resin and ethylene-vinyl alcohol copolymer [V]/polyamide resin layer [III]
(7) Four-layer laminated film of polyolefin layer [I]/adhesive layer [II]/mixed layer [V] of polyamide resin and ethylene-vinyl alcohol copolymer/ethylene-vinyl alcohol copolymer layer [IV]
(8) Five-layer laminated film of polyolefin layer [I]/adhesive layer [II]/polyamide resin layer [III]/adhesive layer [II]/polyolefin layer [I]
(9) Five-layer laminated film of polyolefin layer [I]/adhesive layer [II]/ethylene-vinyl alcohol copolymer layer [IV]/adhesive layer [II]/polyolefin layer [I]
(10) Five-layer laminated film of polyolefin layer [I]/adhesive layer [II]/mixed layer [V] of polyamide resin and ethylene-vinyl alcohol copolymer/adhesive layer [II]/polyolefin layer [I]
(11) Four-layer laminated film of polyolefin layer [I]/adhesive layer [II]/ethylene-vinyl alcohol copolymer layer [IV]/adhesive layer [II]
(12) Four-layer laminated film of polyolefin layer [I]/adhesive layer [II]/polyamide resin layer [III]/adhesive layer [II]

The multilayer laminated film of the present invention, for example, a three-layer laminated film, can be produced by stacking, for example, a polyolefin layer [I], an adhesive layer [II], and a polyamide resin layer [III], an ethylene-vinyl alcohol copolymer layer [IV] or a mixed layer [V] of a polyamide resin and an ethylene-vinyl alcohol copolymer in a molten state.

The multilayer laminated film of the present invention can be produced, for example, by a method of co-extruding resins forming each layer.

When the multilayer laminated film of the present invention is subjected to, for example, the aforementioned co-extrusion molding and cast molding from a T-die at a high molding rate of, for example, 20 m/min or more and preferably 20 to 150 m/min, a multilayer laminated film exhibiting high adhesive strength can be obtained.

The multilayer laminated film of the present invention may be in an unstretched state as is after such molding, or may be in a state where it has been stretched at least in one axis direction and preferably biaxial direction, after molding. When the multilayer laminated film includes the polyamide resin layer [III] therein, the film is preferably used after having been stretched. When the multilayer laminated film includes the ethylene-vinyl alcohol copolymer layer [IV] therein, the film can be used in either an unstretched or stretched condition. Stretching provides a film with a high strength, and therefore when a film is required for a high strength, a stretched multilayer laminated film is preferred. Generally, when a film is stretched, the adhesive strength of an adhesive layer is significantly reduced, however, the multilayer laminated film of the present invention has sufficiently high adhesive strength without significantly reducing its adhesive force even when stretched. When stretching a multilayer laminated film, it is desirable to carry out the stretching in at least one axial direction at a stretching ratio of 1.5 to 10 times and preferably 1.5 to 6 times. In biaxial stretching, it is also preferable to stretch the film in a biaxial direction (in each axial direction) at a stretching ratio of 1.5 to 10 times and preferably 1.5 to 6 times.

Stretching conditions upon production of multilayer laminated film as a shrink film are a stretching temperature of usually 70 to 130°C and a stretching ratio (film longitudinal direction × film width direction) of usually 2 × 2 to 5 × 5 times. A thickness of the film produced under such conditions is usually 10 to 200 um. The film can be heat shrunk, typically by 5% to 50% of the length or width, for example, at temperature between 70 and 130°C.

The resin composition of the present invention exhibits an excellent adhesive strength compared to other resin (for example, an ethylene-vinyl alcohol copolymer).

The multilayer laminated film of the present invention also exhibits excellent adhesive strength characteristics even when stretched, and is excellent in a strength and gas barrier properties.

Therefore, the multilayer laminated film of the present invention can be suitably used, for example, as a shrink film for packaging general foods and for packaging meat such as ham.

### Examples

The present invention will be described in more detail below based on Examples, but the present invention is in no way limited to these Examples.

The polymers used in Examples and Comparative Examples are shown below.

### [Modified ethylene-α-olefin copolymer (A)]

The following was used as the modified ethylene-α-olefin copolymer (A).

Maleic anhydride modified ethylene-1-butene copolymer (A-1) :
MFR (190°C., 2.16 kg load) = 2.4 g/10 minutes, density = 0.885 g/cm³, and amount of maleic anhydride grafted = 0.5% by mass.

Maleic anhydride modified ethylene-1-hexene copolymer (A-2) :
MFR (190°C., 2.16 kg load) = 4.0 g/10 minutes, density = 0.920 g/cm³, and amount of maleic anhydride grafted = 2.0% by mass.

### [Ethylene-α-olefin copolymer resin (B)]

The following was used as the ethylene-α-olefin copolymer resin (B).
Ethylene-1-butene copolymer resin (B-1):
   MFR (190°C, 2.16kg load) = 2.6 g/10 minutes, density = 0.918g/cm³, and melting point = 119°C
Ethylene-1-hexene copolymer resin (B-2):
   MFR (190°C, 2.16kg load) = 2.0 g/10 minutes, density = 0.913g/cm³, and melting point = 113°C
Ethylene-1-butene copolymer resin (B-3):
   MFR (190°C, 2.16kg load) = 2.0 g/10 minutes, density = 0.918g/cm³, and melting point = 122°C

### [Ethylene-α-olefin copolymer elastomer (C)]

The following was used as the ethylene-α-olefin copolymer elastomer (C).
Ethylene-propylene copolymer elastomer (C-1): MFR (190°C, 2.16kg load) = 3.0 g/10 minutes and density = 0.869g/cm3
Ethylene-1-butene copolymer elastomer (C-2): MFR (190°C, 2.16kg load) = 3.6 g/10 minutes and density = 0.885g/cm3

The physical properties of the polymers and resin compositions used in Examples and Comparative Examples were measured by the following methods.

### [Method for measuring physical properties]

### <Melt flow rate (MFR)>

MFR was measured at 190°C under a load of 2.16 kg in accordance with ASTM D1238.

### <Density>

The density was measured in accordance with ASTM D1505 (density gradient tube method).

### <Amount grafted (amount of constituent unit derived from maleic anhydride)>

The amount grafted (the amount of constituent unit derived from maleic anhydride) was quantitatively determined by measuring intensity of a peak at 1790 cm⁻¹ derived from maleic anhydride using an infrared absorption analyzer, and using a calibration curve preliminarily prepared.

### <Melting point>

The melting point of the ethylene-α-olefin copolymer resin (B) was measured by differential scanning calorimetry (DSC) using the method described below.

The melting point was determined from an endothermic curve obtained when approximately 5 mg of a sample was placed and sealed in an aluminum pan, raised from room temperature to 200°C at a rate of 10°C/min using DSCRDC220 manufactured by Seiko Instruments Inc., held at 200°C for 5 minutes, and then lowered from 200°C to -100°C at a rate of 10°C/min, held at -100°C for an additional 5 minutes, and next raised to 200°C at a rate of 10°C/min.

Incidentally, the melting point is temperature at the peak position of an endothermic curve measured by DSC. When a plurality of peaks were detected upon measurement, the peak temperature detected on the highest temperature side was defined as the melting point.

### [Example 1]

### <Production of resin composition>

30% by mass of the maleic anhydride modified ethylene-1-butene copolymer (A-1),
20% by mass of the ethylene-1-butene copolymer resin (B-1),
20% by mass of the ethylene-propylene copolymer elastomer (C-1), and
30% by mass of the ethylene-1-butene copolymer elastomer (C-2)
were melt-kneaded at 200°C using a single screw extruder to obtain a resin composition (1). The resulting resin composition had an MFR of 2.8 g/10 minutes, a density of 0.888 g/cm³, and a grafted amount of maleic anhydride of 0.15% by mass.

### <Production of laminate>

Using an ethylene-vinyl alcohol copolymer (EVOH: EVAL J171B manufactured by Kuraray Co., Ltd., MFR (190°C, 2.16 kg load) = 1.7 g/10 minutes, and ethylene content = 32 mol%), the above resin composition (1), and a linear low-density polyethylene (PE: manufactured by Prime Polymer Co., Ltd., ULTZEX 2021L, MFR (190°C, 2.16 kg load) = 2.0 g/10 minutes, and density = 0.920 g/cm³), a three-type and five-layer coextrusion cast film was molded using the following conditions.

### <Molding conditions>

Molding machine: Die diameter 50mmΦ extruder (for a PE layer) Set temperature···220°C
Die diameter 40mmΦ extruder (for a resin composition (1) layer)
Set temperature···220°C
Die diameter 40mmΦ extruder (for an EVOH layer)
Set temperature···220°C
Molding rate: 20m/min

Under the above conditions, a film with the following film layer configuration and thickness of each layer: PE (outer layer)/resin composition (1)/EVOH (intermediate layer)/resin composition (1) /PE (inner layer) = 30/15/10/15/30 um, was obtained.

The five-layer film obtained as described above was heated at 110°C for 1 minute using a stretching apparatus manufactured by Bruckner Maschinenbau GmbH & Co. KG, and then stretched 3 times in the MD direction at that temperature to produce a stretched film.

Under the same conditions as above, the obtained five-layer film with the following film layer configuration and thickness of each layer: PE (outer layer)/resin composition (1)/EVOH (intermediate layer)/resin composition (1)/PE (inner layer) = 60/30/20/30/60 um, was heated at 110°C for 1 minute using a stretching apparatus manufactured by Bruckner Maschinenbau GmbH & Co. KG, and then stretched 4.5 times in the MD direction at that temperature to produce a stretched film.

The obtained stretched film was stored at ordinary temperature for one week, then cut into a size of 15 mm in width, and the interlayer adhesive strength (peel strength) between the resin composition layer (1) on the inner side and the EVOH layer was determined by a T-peeling test at a peeling rate of 300 mm/min. Table 1 shows the physical properties of the obtained resin composition and stretched film.

### [Example 2]

A resin composition was produced in the same manner as in Example 1, except that the compounding formulation was changed to that shown in Table 1, and a stretched film was produced in the same manner as in Example 1.
Table 1 shows the physical properties of the obtained resin composition and stretched film.

### [Comparative Example 1]

A resin composition was produced in the same manner as in Example 1, except that the compounding formulation was changed to that shown in Table 1 and a stretched film was produced in the same manner as in Example 1.
Table 1 shows the physical properties of the obtained resin composition and stretched film.

### [Comparative Example 2]

A resin composition was produced in the same manner as in Example 1, except that the compounding formulation was changed to that shown in Table 1 and a stretched film was produced in the same manner as in Example 1.
Table 1 shows the physical properties of the obtained resin composition and stretched film.

**[Table 1]**

| | | Unit | Example 1 | Example 2 | Comparative Example 1 | Comparative Example 2 |
|---|---|---|---|---|---|---|
| Composition of resin composition | Maleic anhydride modified ethylene-1-butene copolymer (A-1) | % by mass | 30 | 30 | 30 | |
| | Maleic anhydride modified ethylene-1-hexene copolymer (A-2) | % by mass | | | | 10 |
| | Ethylene-1-butene copolymer resin (B-1) | % by mass | 20 | | | |
| | Ethylene-1-hexene copolymer resin (B-2) | % by mass | | 20 | | |
| | Ethylene-1-butene copolymer resin (B-3) | % by mass | | | 20 | 20 |
| | Ethylene-propylene copolymer elastomer (C-1) | % by mass | 20 | 20 | 20 | 30 |
| | Ethylene-1-butene copolymer elastomer (C-2) | % by mass | 30 | 30 | 30 | 40 |
| Physical properties of composition | MFR (190°C) | g/10 min. | 2.8 | 2.7 | 2.7 | 3.0 |
| | Density | g/cm³ | 0.888 | 0.887 | 0.888 | 0.890 |
| | Melting point | °C | 118 | 106 | 120 | 120 |
| | Amount grafted | % by mass | 0.15 | 0.15 | 0.15 | 0.20 |
| Physical properties of stretched film | Adhesive strength of 3-fold stretched film | N/15 mm | 5.3 | 5.7 | 4.3 | 3.8 |
| | Adhesive strength of 4.5-fold stretched film | N/15 mm | 5.9 | 6.7 | 5.0 | 4.4 |

## Claims

1. A resin composition comprising:
[I] a modified ethylene-α-olefin copolymer [A] obtained by modifying a copolymer of ethylene and an α-olefin having 3 to 20 carbon atoms with an unsaturated carboxylic acid or a derivative thereof, the modified ethylene-α-olefin copolymer [A] satisfying the following (i) and (ii):
(i) a density in a range of 0.860 g/cm³ or more and less than 0.900 g/cm³; and
(ii) an amount grafted of 0.01 to 5% by mass;
[II] an unmodified ethylene-α-olefin copolymer resin [B] having a melting point of 121°C or less; and
[III] an unmodified ethylene-α-olefin copolymer elastomer [C],
wherein a melt flow rate (ASTM D 1238, 190°C, 2.16 kg load) is in a range of 0.1 to 50 g/10 minutes, and
the amount of the unsaturated carboxylic acid or a derivative thereof grafted is in a range of 0.01 to 1.0% by mass relative to 100% by mass of the total resin composition.

2. The resin composition according to claim 1, wherein the unmodified ethylene-α-olefin copolymer resin [B] has a density of 0.900 g/cm³ or more, and the unmodified ethylene-α-olefin copolymer elastomer [C] has a density of less than 0.900 g/cm³.

3. The resin composition according to claim 1 or 2, wherein the resin composition has a melting point of 119°C or less.

4. The resin composition according to claim 1 or 2, wherein the unmodified ethylene-α-olefin copolymer resin [B] has a density of less than 0.930 g/cm³.

5. The resin composition according to claim 1 or 2, wherein the unmodified ethylene-α-olefin copolymer resin [B] has a density of 0.915 g/cm³ or less.

6. The resin composition according to claim 1 or 2, wherein the resin composition has a density of 0.875 to 0.920 g/cm³.

7. A multilayer laminated film which is a laminate of three or more layers in which a polyolefin layer [I],
an adhesive layer [II] composed of the resin composition according to claim 1 or 2, and
a polyamide resin layer [III], an ethylene-vinyl alcohol copolymer layer [IV], or a mixed layer [V] of a polyamide resin and an ethylene-vinyl alcohol copolymer are stacked in this order.

8. The multilayer laminated film according to claim 7, wherein the polyolefin is a polyethylene or a polypropylene.

9. The multilayer laminated film according to claim 7, wherein the multilayer laminated film is stretched in at least one axis direction.

10. The multilayer laminated film according to claim 9, wherein the multilayer laminated film is stretched in at least one axis direction at a stretching ratio of 1.5 to 10 times.

11. The multilayer laminated film according to claim 7, wherein the multilayer laminated film is biaxially stretched.

12. The multilayer laminated film according to claim 11, wherein the multilayer laminated film is biaxially stretched in each axial direction at a stretching ratio of 1.5 to 10 times.

13. The multilayer laminated film according to claim 7, wherein the total thickness of the adhesive layer [II], and
the polyamide resin layer [III], the ethylene-vinyl alcohol copolymer layer [IV] or the mixed layer [V] of a polyamide resin and the ethylene-vinyl alcohol copolymer is 12% or less of the total thickness of the laminate.
